# EUROPEAN PATENT APPLICATION

(11) **EP 1 101 996 A2**
(43) Date of publication of application: **23.05.2001**
(21) Application number: 00650192.8
(22) Date of filing: 15.11.2000
(51) Int. Cl.: F16L 19/02, F16L 19/08

(54) **Double seal connector for hydraulic and pneumatic system tubing**

(30) Priority: 15.11.1999 IE 990954
(71) Applicant: Valmarip EEIG, Dublin 2 (IE)
(72) Inventor: Jennings, Martin Alan, Oxford OX2 6RW (GB)
(74) Representative: Brophy, David

(57) **Abstract**

A connector for hydraulic and pneumatic system tubing receives an end of a length of tubing in an axial cavity (17) between a body (11) and a locking nut (12). At least two parallel internal seals (22,23) are separated by a spacer (24) on the end of the tubing to ensure an optimum seal between the tubing and the connector.

## Description

The present invention concerns a connector for hydraulic and pneumatic systems having applications in industrial, naval, fire equipment, refrigeration fields etc., with the tubing being of any type of metal.

Various types of straight, elbow and 'T' connectors are already known for the connecting/disconnecting of tubing and/or connecting/disconnecting of tubing to both liquid and gaseous fluid distribution units.

One type of known connector consists essentially of a body with at least one threaded part, a locking nut screwed onto the said body, a tapered split ring, an intermediate washer and a seal, generally toroidal, interposed between a conical seating in the nut and a prepared radial surface on the body of the connector.

The end of the tube to be connected is inserted into the connector, passing through the nut, the tapered split ring, the washer and the seal, to rest against, if required a locating shoulder in the body of the connector. So, by tightening the locking nut on the connector, firstly a compression of the seal occurs forcing it against the respective radial surface in the body and around the tube and subsequently a tightening of the split ring around the tube itself to ensure a hermetic seal and the mechanical mating of the nut and the connector body.

In one particularly efficient and advantageous version of the connector, the locking nut can incorporate two opposing half collars. These are connected by screws through which, after having tightened the locking nut on the body of the connector, they can be tightened onto the tube, in this way forming a second mechanical locking of the tube in addition to that effected by means of the tapered split ring.

However, in the known products only one internal seal is provided between the body of the connector and the tube being connected.

But one single seal may not be sufficient to guarantee an optimum hermetic sealing of the joint under all conditions. The seal can in fact deteriorate and deform over time with the inserting of the tube, affecting its sealing action, especially under high pressures and where the connector is assembled and disassembled more than once.

The scope of this present invention is to obviate these disadvantages so as to render the connector for the above mentioned tubing more effective and reliable with regards to the sealing, in particular without modifying the structure and the combination of its basic components.

In accordance with this invention, this aim is achieved by equipping the connector with at least two parallel internal seals with a spacer between them. These seals can be toroidal or of another configuration to, in any case, ensure, when the connector is assembled, a coupling sealing zone around the tubing being connected, offering an optimum airtight joint.

The attached drawings illustrate some examples of tubing connectors incorporating this invention. In the said drawings:
Fig. 1 shows a partial section longitudinal view of a usual type of connector but with two internal seals;
Fig. 2 shows a similar section view of a connector with locking collars attached to the nut with a pair of internal seals; and
Figs. 3 shows a connector as in Fig. 2 , but without the internal tapered ring.

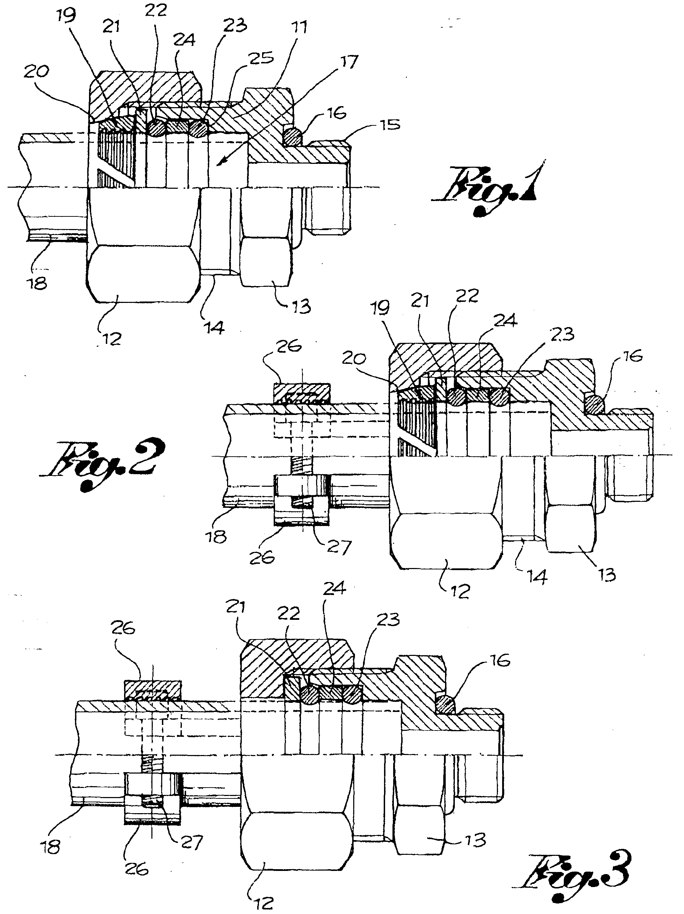

The connector in Fig. 1 consists of a body 11 and a locking nut 12. The body 11 has an external polygonal portion 13 for accepting a spanner with an externally threaded portion 14 on one end and on the other end, when required, therefore not necessarily, a threaded collar 15 with its respective seal 16.

The locking nut 12 is screwed onto the threaded portion 14 of the body 11. The unit, the body 11 and the nut 12, forms a cavity 17 into which one end of the tubing to be clamped 18 is inserted. In the said cavity 17 there are located: a tapered split ring 19, destined to interact with a complementary conical seating 20 inside the nut 12; a washer 21 adjacent to the greater diameter of the split ring; a first annular seal 22; at least one second annular seal 23, separated from the first seal by an interposed spacer 24 and destined to be in contact with a radial mating surface 25 provided in the body 11.

The tapered ring 19 can have internal annular projections to afford a better grip on the external surface of the tubing.

After the tube 18 has been inserted, in order, through the nut 12, the tapered ring 19, the washer 21, the first seal 22, the spacer 24 and the second seal 23, the connector is assembled by screwing the nut 12 onto the body 11 to tighten the tapered ring around the tube. In this way the seals 22 and 23 are gripped between the body 11 and the tube 18 so ensuring a double seal.

The connector in Fig. 2 has the same type of components as in the above described Fig. 1 with the addition of two half collars 26 integral with the locking nut 12 and connected together by locking screws 27 by means of which the said collars can be tightened onto the tube as an additional tube clamping feature. The internal surfaces of the half collars 26 can have annular projections, similar to the tapered ring 19, to afford a better grip on the external surface of the tube.

Finally, the connector in Fig. 3 is the same as that in Fig. 2 except it does not have the tapered split ring 19, being for use on small section tubing or that under low pressures.

## Claims

1. A connector for hydraulic and pneumatic system tubing, comprising,
a body (11) with at least one part externally threaded (14) and an internal radial mating surface (25),
a locking nut (12) screwed onto the body and having an internal tapered seating (20),
the body and the locking nut together forming an axial cavity (17) to receive an end of a length of tubing to be clamped and in which is located a tapered split ring (19) interacting with said tapered seating (20) in the nut (12) for tightening around the tubing, and a washer (21) adjacent to the tapered ring,
characterised in that in said cavity (17) between the washer (21) and the internal mating surface (25) are located at least one first seal (22) and one second seal (23) separated by a spacer (24) for a multiple sealing around the tubing when the connector is assembled.

2. A connector in accordance with claim 1, in which said first seal (22) is gripped, in use, between the washer (21), the body (11), the spacer (24) and the tubing, and said second seal (23) is gripped between the spacer(24), the body (11), the internal mating surface (25) and the tubing to produce two sealing zones on the tubing itself.

3. A connector in accordance with claim 1 or 2, in which the nut (12) incorporates two facing half collars (26) which are joined together and closed around the tubing by means of locking screws (27).

4. A connector for hydraulic and pneumatic system tubing, comprising
a body (11) with at least one part externally threaded (14) and an internal radial mating surface (25),
a locking nut (12) screwed onto the body incorporating two facing half collars (26) connected by locking screws (27),
the body and the locking nut together forming an axial cavity (17) to receive an end of a length of tubing to be clamped,
characterised in that in said cavity between the nut and the internal mating surface in the body are located at least two seals (22,23) separated by a spacer (24) adapted to produce a multiple sealing around the tubing when the connector is assembled.

5. A connector in accordance with any preceding claim, in which said seals (22,23) are toroidal O-rings.
